# EUROPÄISCHE PATENTANMELDUNG

(11) **EP 1 097 853 A2**
(43) Veröffentlichungstag der Anmeldung: **09.05.2001**
(21) Anmeldenummer: 00105174.7
(22) Anmeldetag: 11.03.2000
(51) Int. Cl.: B61G 11/16, B60R 19/22, F16F 7/12

(54) **Einrichtung für den Energieverzehr bei einem Schienenfahrzeug, insbesondere des Nahverkehrs**

(30) Priorität: 06.11.1999 DE 19953395
(71) Anmelder: Siemens Duewag Schienenfahrzeuge GmbH, 47829 Krefeld (DE)
(72) Erfinder: Geyer, Karl-Eberhard, Dr.-Ing., 40591 Düsseldorf (DE)

(57) **Zusammenfassung**

Eine Einrichtung für den Energieverzehr bei einem Schienenfahrzeug, insbesondere des Nahverkehrs, weist ein Energieverzehrelement und ein der fahrzeugseitigen Befestigung dieses Elements dienendes Bauteil (3) auf. Das Energieverzehrelement enthält einen Metallschaumkern (1).

## Beschreibung

Die Erfindung betrifft eine Einrichtung für den Energieverzehr bei einem Schienenfahrzeug, insbesondere des Nahverkehrs, wobei diese Einrichtung ein Energieverzehrelement und ein der fahrzeugseitigen Befestigung dieses Elements dienendes Bauteil aufweist.

Es ist allgemein bekannt, an den Enden von Schienenfahrzeugen Energieverzehreinrichtungen (Stoßpuffer) anzubringen, um Beschädigungen der Fahrzeugstruktur zu vermeiden. Diese Einrichtungen sollen einen Teil der Aufprallenergie abbauen, die bei Zusammenstößen mit gleichartigen Fahrzeugen, mit Straßenfahrzeugen oder bei Fahrt gegen ein festes Hindernis auftritt. In der VDV-Schrift 152 "Empfehlungen für die Festigkeitsauslegung von Personenfahrzeugen nach BOStrab", Kapitel 4.2.6 "Beanspruchungen bei Aufstoßvorgängen" sind Aufprallgeschwindigkeiten, Endkräfte und Kraft-Weg-Diagramme vorgegeben.

Bei bekannten Stoßpuffern besteht das Energieverzehrelement beispielsweise aus einem Vollgummikörper oder einem Stahlblechhohlkörper, wobei solche Elemente innerhalb eines gehäuseartigen Befestigungsbauteils angeordnet sind. Ein Nachteil der bisher eingesetzten Stoßpuffer besteht in der Tatsache, daß ihre Energieaufnahmefähigkeit nur gering ist, so daß sie lediglich bei relativ geringen Geschwindigkeiten wirksam sein können. Ein weiterer Nachteil liegt darin, daß die Kraft-Weg-Funktion bisheriger Konstruktionen die Vorgaben der VDV-Schrift 152 nicht erfüllt. Es werden nämlich zu hohe Endkräfte für das Ansprechen der Stoßpuffer benötigt, die dann zu Schäden an der Fahrzeugstruktur führen. Außerdem findet kein kontinuierlicher Energieabbau nach Dreiecks-oder Rechtecksfunktion statt, so daß der Energieabbau pro Zeiteinheit ungünstig verläuft. Ein dritter Nachteil besteht in der Tatsache, daß der Energieabbau nicht progressiv verläuft, so daß er bei kleineren Hindernissen nicht wirksam werden kann; insbesondere bei Kollisionen des Fahrzeuges mit Fußgängern sind Verletzungen nicht auszuschließen. Viertens wird als nachteilig angesehen, daß das Energieaufnahmevermögen nicht an das Fahrzeuggewicht angepaßt werden kann; damit wirkten die Stoßpuffer bei kürzeren Fahrzeugen zu hart, während ihre Wirkung bei längeren Fahrzeugen nur für geringe Geschwindigkeiten vorhanden ist.

Der Erfindung liegt die Aufgabe zugrunde, eine Einrichtung der gattungsgemäßen Art unter Berücksichtigung der Einbausituation und der Austauschbarkeit mit bisherigen Einrichtungen zu schaffen, bei der die Vorgaben der VDV-Schrift 152 hinsichtlich Energieaufnahme, Kraft-Weg-Diagramm, Energie-Zeit-Diagramm und Anpaßbarkeit an das Fahrzeuggewicht erfüllt werden.

Diese Aufgabe wird erfindungsgemäß dadurch gelöst, daß das Energieverzehrelement einen Metallschaumkern enthält.

Vorteilhafte Ausgestaltungen der Erfindung sind in den Unteransprüchen angegeben.

Im Gegensatz zu bisherigen Stoßpuffern kann bei dem Energieverzehrelement nach der Erfindung durch gesteuerte Aufschäumung eines Metalls eine Struktur geschaffen werden, mit der die Forderungen der VDV-Schrift 152 erfüllbar sind. Vorteilhafterweise wird eine dem Energieverzehrelement adäquate Form mit Metallschaum ausgefüllt, der entstehende Kern mit weichem, vorzugsweise gummiartigem Material ummantelt und mit entsprechenden Befestigungsbauteilen versehen.

Der Metallschaum ist hinsichtlich seiner inneren Struktur so beschaffen, daß sein Energieaufnahmevermögen an das Fahrzeuggewicht angepaßt wird, daß er bei einer definierten Kraft mit der Verformung beginnt (Ansprechverhalten) und während der Verformung eine Maximalkraft nicht überschreitet. Außerdem gestattet die innere Struktur des Metallschaums, einen vorgegebenen Zeitverlauf der Verformung zu erreichen. Zusätzlich kann durch mechanische Nachbearbeitung des Schaumkörpers ein vorgegebenes Ansprechverhalten und eine vorgegebene Empfindlichkeit über die metallischen Eigenschaften hinaus gesteuert werden. Denkbar sind ebenfalls vorgegebene spezielle Eigenschaften hinsichtlich Kraft-Weg-Verhalten, Energieabsorption und Endkraft in verschiedenen Richtungen, z. B. bei Aufprall von der Seite.

Die Anpaßbarkeit des Energieverzehrelements an unterschiedliche Fahrzeuggewichte und unterschiedliche Vorgabekennlinien ist weiter durch die Anordnung von Schichten verschiedenartiger Metallschäume denkbar. Durch Variation von Schaumdichte und Schaumhautdichte ist ferner eine Einstellung verschiedener Eigenschaften möglich, beispielsweise hinsichtlich des Kraft-Weg-Verformungsverhaltens, der Festigkeit, der Dichte und der Umformbarkeit. Auch Schäume mit einem Dichtegradienten sind denkbar.

Eine bessere Herstellbarkeit und Anpaßbarkeit des Energieverzehrelements an unterschiedliche Fahrzeuggewichte und unterschiedliche Vorgabekennlinien ist außerdem durch die kombinierte Anordnung von Einzelschichtelementen in Form von Scheiben auf einer Grundplatte, vorzugsweise aus Metall, denkbar.

Im weiteren wird die Erfindung anhand von Ausführungsbeispielen näher beschrieben, die in der Zeichnung schematisch dargestellt sind.

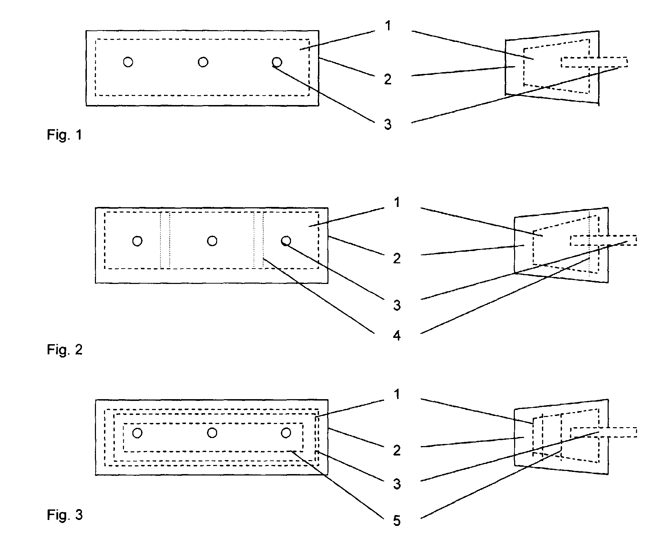

Fig. 1 zeigt den Grundaufbau eines Energieverzehrelements mit einem Metallschaumkern 1 und einem Befestigungselement 3, wobei der Metallschaumkern 1 von einer Umhüllung 2 umgeben ist.
Fig. 2 zeigt eine Ausbildung des Energieverzehrelements, bei der der Metallschaumkern 1 durch mechanische Nachbearbeitung erzeugte Ausfräsungen 4 aufweist, um bestimmte Eigenschaften hinsichtlich der Energieaufnahme zu erzielen.
Fig. 3 zeigt eine Ausführungsform des Energieverzehrelements, bei der der Metallschaumkern 1 aus Schichten 5 verschiedenartiger Schaumstrukturen besteht.

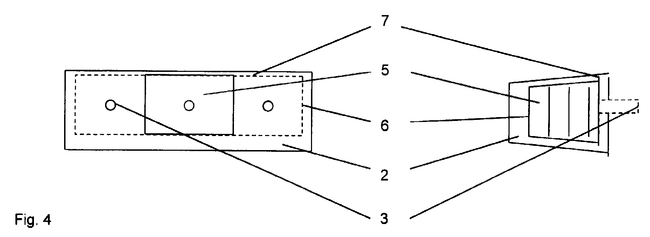

Fig. 4 zeigt eine weitere Gestaltung des Energieverzehrelements, bei der die Metallschaumschichten 5 von einem Hohlkörper 6 umgeben sind, der bevorzugt aus Kunststoff besteht. Die Metallschaumschichten 5 sind auf einer vorzugsweise metallischen Grundplatte 7 angebracht.

### Liste der Bezugszeichen

- 1: Metallschaumkern
- 2: Umhüllung
- 3: Befestigungsbauteil
- 4: mechanische Bearbeitung (Ausfräsung)
- 5: Metallschaumschichten
- 6: Hohlkörper aus Kunststoff
- 7: Grundplatte aus Metall

## Patentansprüche

1. Einrichtung für den Energieverzehr bei einem Schienenfahrzeug, insbesondere des Nahverkehrs, wobei diese Einrichtung ein Energieverzehrelement und ein der fahrzeugseitigen Befestigung dieses Elements dienendes Bauteil (3) aufweist, dadurch gekennzeichnet, daß das Energieverzehrelement einen Metallschaumkern (1) enthält.

2. Einrichtung nach Anspruch 1, dadurch gekennzeichnet, daß der Metallschaumkern (1) bei seiner Herstellung mit speziellen Eigenschaften hinsichtlich des maximalen Energieaufnahmevermögens versehen wird.

3. Einrichtung nach Anspruch 1 oder 2, dadurch gekennzeichnet, daß der Metallschaumkern (1) bei seiner Herstellung mit speziellen Eigenschaften hinsichtlich Kraft-Weg-Funktion versehen wird.

4. Einrichtung nach einem der Ansprüche 1 bis 3, dadurch gekennzeichnet, daß der Metallschaumkern (1) bei seiner Herstellung mit speziellen Eigenschaften hinsichtlich der maximalen Endkraft versehen wird.

5. Einrichtung nach einem der Ansprüche 1 bis 4, dadurch gekennzeichnet, daß der Metallschaumkern (1) bei seiner Herstellung mit speziellen Eigenschaften hinsichtlich der Energie-Zeit-Funktion versehen wird.

6. Einrichtung nach einem der Ansprüche 1 bis 5, dadurch gekennzeichnet, daß der Metallschaumkern (1) nach seiner Herstellung vorzugsweise auf mechanischem Wege so strukturiert wird, daß durch diese Strukturierung zumindest eine der in den Ansprüchen 2 bis 5 genannten speziellen Eigenschaften erreichbar ist.

7. Einrichtung nach einem der Ansprüche 1 bis 6, dadurch gekennzeichnet, daß der Metallschaumkern (1) aus mehreren Schichten ― auch verschieden strukturierter - Metallschäume besteht, um damit zumindest eine der in den Ansprüchen 2 bis 5 genannten speziellen Eigenschaften zu erreichen.

8. Einrichtung nach einem der Ansprüche 1 bis 7, dadurch gekennzeichnet, daß der Metallschaumkern (1) bei seiner Herstellung so strukturiert wird, daß er zumindest eine der in den Ansprüchen 2 bis 5 genannten speziellen Eigenschaften in verschiedenen Richtungen aufweist.

9. Einrichtung nach einem der Ansprüche 1 bis 7, dadurch gekennzeichnet, daß der Metallschaumkern (1) nach seiner Herstellung vorzugsweise mechanisch so strukturiert wird, daß er zumindest eine der in den Ansprüchen 2 bis 5 genannten speziellen Eigenschaften in verschiedenen Richtungen aufweist.

10. Einrichtung nach einem der Ansprüche 1 bis 9, dadurch gekennzeichnet, daß wenigstens ein Befestigungsbauteil (3) beim Schäumen direkt eingebracht wird.

11. Einrichtung nach einem der Ansprüche 1 bis 10, dadurch gekennzeichnet, daß wenigstens ein Befestigungsbauteil (3) nach dem Schäumen nachträglich angebracht wird.

12. Einrichtung nach einem der Ansprüche 1 bis 11, dadurch gekennzeichnet, daß wenigstens ein Befestigungsbauteil (3) nachträglich durch Umspritzen des Metallschaumkerns (1) nach dem Schäumen angebracht wird.

13. Einrichtung nach einem der Ansprüche 1 bis 12, dadurch gekennzeichnet, daß der Metallschaumkern (1) bei seiner Herstellung so strukturiert wird, daß er spezielle Dichtegradienten hinsichtlich der Ansprüche 2 bis 5 aufweist.

14. Einrichtung nach einem der Ansprüche 1 bis 12, dadurch gekennzeichnet, daß der Metallschaumkern (1) von einer Umhüllung 2 umgeben ist, wobei die Umhüllung 2 mittels Sollbruchstellen bzw. Solleinreißstellen so strukturiert ist, daß sie den Verformungsprozeß des Metallschaumkerns (1) nicht behindert oder verzögert.

15. Einrichtung nach einem der Ansprüche 1 bis 12, dadurch gekennzeichnet, daß der Metallschaumkern (1) oder die Metallschaumschichten (5) auf einer Grundplatte (7), vorzugsweise aus Metall, angebracht sind.

16. Einrichtung nach einem der Ansprüche 1 bis 12, dadurch gekennzeichnet, daß ein Hohlkörper (6), vorzugsweise aus Kunststoff, verwendet wird, der den Metallschaumkern (1) oder die Metallschaumschichten (5) zur Gewichtseinsparung der Umhüllung (2) weiträumig umgeben kann.
